# EUROPÄISCHE PATENTANMELDUNG

(11) **EP 1 010 450 A1**
(43) Veröffentlichungstag der Anmeldung: **21.06.2000**
(21) Anmeldenummer: 99121118.6
(22) Anmeldetag: 22.10.1999
(51) Int. Cl.: B01D 21/01, C08J 11/00, B05B 15/12

(54) **Verfahren zur Rückgewinnung von entpigmentierten Bindemitteln aus Lackspülmitteln, Altlacken und Lackkoagulaten**

(30) Priorität: 18.12.1998 DE 19858526
(71) Anmelder: Chemische Werke Kluthe GmbH, 69115 Heidelberg (DE)
(72) Erfinder: Bender, Andreas, 74909 Meckesheim (DE); Fleischmann, Klaus-Dieter, Dr., 69251 Gaiberg (DE)
(74) Vertreter: Zellentin, Wiger, Dipl.-Ing.

(57) **Zusammenfassung**

Die Erfindung betrifft ein neues Verfahren zur Rückgewinnung von entpigmentierten Bindemitteln aus Lackspülmitteln, Altlacken und Lackkoagulaten, wobei das gebrauchte Material durch Zugabe von Lösemitteln auf eine Viskosität zwischen 0,01 und 0,1 Pa*s eingestellt und durch Schwerkraftsedimentation die Lösemittelphase von den Feststoffen und ggf. Wasser getrennt wird und durch Abdestillieren des überschüssigen Lösemittels die Bindemittelphase zurückgewonnen wird, wobei die niedrigviskose Mischung ein organophiles Schichtsilikat in einer Menge zwischen 0,01 und 5 Gew.% enthält und diese Mischung während einer Adsorptionsphase gerührt wird, bis eine Flockenbildung des Pigments zusammen mit dem Schichtsilikat erfolgt ist, bevor sie der Schwerkraftsedimentation unterzogen wird.

## Beschreibung

Die Erfindung betrifft ein neues Verfahren zur Rückgewinnung von entpigmentierten Bindemitteln aus Lackspülmitteln, Altlacken und Lackkoagulaten, wobei das Lackmaterial durch Zugabe von Lösemitteln auf eine Viskosität zwischen 0,01 und 0,1 Pa*s eingestellt und durch Schwerkraftsedimentation die Lösemittelphase von den Feststoffen und ggf. Wasser getrennt wird und durch Abdestillieren des überschüssigen Lösemittels die Bindemittelphase zurückgewonnen wird.

Bei der Verarbeitung von Lacken und Farben in Lackspritzkabinen entstehen Abfälle durch das sogenannte Overspray, welches nach dem Entkleben und Koagulieren in Wasser als Lackkoagulat (Lackschlamm) anfällt.
Des Weiteren sind Lackanteile in Lösemitteln enthalten, die nach dem Spülen und Reinigen von mit Lack belasteten Anlagenteilen anfallen, im Folgenden Lackspülmittel genannt.
Eine dritte Quelle für bindemittelhaltige Abfälle sind nicht gebrauchte Altlacke, die meistens als Fehlchargen entsorgt werden müssen.

Da diese vorgenannten Materialien stark durch Pigmente eingefärbt sind, bzw. durch das Zusammenführen verschiedener Farbpartien eine nicht mehr verwertbare Mischfarbe entsteht, ist das darin enthaltene stark gefärbte Bindemittel nicht mehr für eine Lackproduktion mit bestimmter Farbgebung geeignet.

Allein das Lösemittel kann für eine Wiederverwertung teilweise meist destillativ von den übrigen Lackanteilen abgetrennt und wieder eingesetzt werden. Die restlichen Lackanteile sind aus den vorgenannten Gründen Abfall und werden meistens der Verbrennung zugeführt.

Es ist bekannt, daß eine Teilpigmentierung bei dünnflüssigen Medien durch Schwerkraftsedimentation mittels Zentrifugen erfolgen kann (DE 35 16 881 und DE 38 02 851). Trotz erheblicher Zentrifugalkräfte (von 14000 g - 20000 g) werden sehr feinteilige Feststoffpartikel, insbesondere Pigmentpartikel nur bis auf einen Restgehalt von ca. 3 % entfernt. Eine beliebige Weiterverwertung dieser Bindemittel ist deshalb ebenfalls nicht gegeben.

Ferner ist eine Trennung von Pigmenten und Bindemitteln auf chemischem Wege beschrieben ( DE 38 02 851 C1, DE 40 28 905 C1). Dabei werden die Gemische aus Lösemittel, Bindemittel, Pigmenten und Füllstoffen mit Säure und anschließend mit Lauge behandelt, um die Pigmente zu koagulieren und zu sedimentieren. Diese Verfahren werden zwar auf möglichst schonende Weise durchgeführt, jedoch ist ein chemischer Angriff auf die Bindemittel, der diese für die spätere Verarbeitung schädigt, nicht ganz auszuschließen.

Es stellte sich daher die Aufgabe, ein Verfahren zu entwickeln, mit welchem eine schonende vollkommene Entpigmentierung und damit Entfärbung der Bindemittelphase in den vorgenannten Materialien erreicht wird, ohne daß das Bindemittel dadurch angegriffen wird. Bevorzugt sind dazu ausschließlich physikalische Wirkprinzipien einzusetzen, da diese eine schonende Behandlung garantieren.

Diese Aufgabe wird durch die Merkmale des Hauptanspruches gelöst und durch die Merkmale der Unteransprüche gefördert.

Als Antiabsetztmittel zur Stabilisierung von Lacken und Dispersionen werden zum Teil Schichtsilikate eingesetzt. Diese Mittel wirken der Sedimentation von gröberen und schwereren Teilchen in der Dispersion entgegen.

Es hat sich nun gezeigt, daß bei genügend niedriger Viskosität des Mediums der Antiabsetztefiekt sich in sein Gegenteil umkehrt, d.h. durch Zugabe eines Schichtsilikates, insbesondere eines organophil eingestellten Bentonits, dieses unter Mikroflockenbildung relativ rasch sedimentiert. Parallel zu dieser Sedimentationsneigung in verdünnten Medien weist das Schichtsilikat einen Adsorptionseffekt auf, d.h. es bilden sich mit anderen festen Inhaltsstoffen, d.h. den Pigmenten und Füllstoffen, Adsorptionskomplexe, die dadurch mit aussedimentieren. Diese beiden Erscheinungen der Adsorption und Sedimentation werden erfindungsgemäß für die Entpigmentierung von Lackabfällen ausgenutzt.

Erfindungsgemäß werden die Abfälle, die aus Lackspülmittel, Altlackresten oder Lackkoagulaten aus dem Overspray von Lackierkabinen bestehen können, mit einem organischen Lösemittel, das die im Lack enthaltenen Bindemittel löst und bei Temperaturen siedet, welche das Bindemittel nicht schädigen, damit sie anschließend wieder destillativ leicht entfernt werden können, in einer Menge versetzt, durch die die Viskosität der organischen Phase auf 0,01 - 0,1 Pa*s herabgesetzt wird.

Die Menge der zuzufügenden Lösemittel ist abhängig davon, was als Ausgangsmaterial eingesetzt wird. Lackspülmittel, die vergleichsweise große Mengen organische Spülmittel enthalten, brauchen ggf. nur wenig oder überhaupt nicht verdünnt zu werden, Altlacke, die weitgehend lösemittelfrei sind, erfordern dagegen größere Mengen Zusätze. Soweit Overspray aus Lackierkammern, welches größere Mengen Wasser enthält, zur Aufarbeitung gelangt, ist es vorteilhaft, mit Wasser nicht oder nur wenig mischbare Lösemittel zu verwenden, um die wässrige Phase zu separieren und abzutrennen und einen Lösemittelverlust dabei zu vermeiden.

Als Lösemittel werden vorzugsweise Ester, insbesondere Ethyl - bis Hexylester niederer Fettsäuren, Ketone, Ether, niedere Alkohole und ähnliche Produkte verwendet, welche Siedepunkte bis etwa 120°C aufweisen. Unpolare Lösungsmittel, wie aliphatische Kohlenwasserstoffe, sind weniger geeignet, da sie kein genügendes Lösevermögen für die Bindemittel aufweisen. Chlorkohlenwasserstoffe und aromatische Verbindungen werden als gesundheitsgefährdende Substanzen vorzugsweise nicht verwendet, obwohl sie wegen ihres Löse- und Siedeverhaltens zum Teil geeignet wären.

Die Lackabfälle stammen vorzugsweise aus organischen Lösemittellacken, da deren Bindemittel sich in den vorstehenden Lösemitteln gut auflösen lassen. Wässrige Dispersionslacke mit weitgehend polymerisierten Kunststoffbindemitteln weisen normalerweise keine ausreichende Löslichkeit des Bindemittels auf. Bevorzugte Lackbindemittel sind Alkydharze, Melaminharze, Nitrocellulosen, Epoxidharze und Phenolharze.

Ausreichend niedere Viskositäten werden üblicherweise erreicht, wenn das Lösemittel-/Bindemittelverhältnis zwischen 3- 10 Teilen Lösemittel auf einen Teil Bindemittel liegt. Die in der Mischung enthaltenen Feststoffe sollten dabei zwischen ungefähr 0,1 - 2,5 Teilen Pigment und Füllstoff pro Teil Bindemittel liegen.

Lackabfall und Lösemittel werden in geeigneten Mischern zu einer homogenen Suspension vermischt und erfindungsgemäß eine Menge von 0,01 - 5 Gew.-% eines organophilen Schichtsilikats zugeführt und ebenfalls feinst in der Mischung verteilt. Innerhalb einer Zeit von 1 - 20 Minuten erfolgt üblicherweise eine Adsorption aller in der Mischung enthaltenen Feststoffe, d.h. der Pigmente und Füllstoffe, an die Partikel des zugeführten Schichtsilikats, wobei sich Flocken bilden, die anschließend abgetrennt werden können. Die Abtrennung kann durch Filtration oder Sedimentation der Feststoffe und Abdekantieren der organischen Lösemittelüberstände erfolgen.

Bei der Sedimentation kann es vorteilhaft sein, eine Zentrifuge anzuwenden, durch die dieser Vorgang beschleunigt wird. Die dazu notwendigen Zentrifugalkräfte sind jedoch wesentlich geringer als dies nach dem Stand der Technik erforderlich war, da die mit Hilfe der Schichtsilikate gebildeten Partikel gröber und daher leichter sedimentierbar sind. Eine Zentrifugalbeschleunigung von 2 bis 100 g hat sich als brauchbar erwiesen.

Zur Rückgewinnung der entpigmentierten Bindemittel wird die klare organische Lösung destilliert und das zur Verdünnung eingesetzte Lösemittel dabei wiedergewonnen, so daß es wieder in den Prozeß zurückgeführt werden kann. Soweit die verbleibenden Lösemittel für die Wiederverwendung des Bindemittels bei der Herstellung von Lacken geeignet sind, wird die Destillation nur bis zu der Konzentration fortgesetzt, die der Weiterverarbeitung dienlich ist. Soweit die zur Verdünnung verwendeten Lösemittel bei der späteren Bearbeitung stören, muß weiter eingedampft und die Bindemittel selbst durch geeignete neue Lösemittel wieder in einen verarbeitungsfähigen Zustand versetzt werden. Soweit die aus der Lackproduktion stammenden Lösemittel einen höheren Siedepunkt als die zur Verdünnung verwendeten Lösemittel besitzen, tritt dieser Zustand automatisch ein.

Da die verwendeten Lösemittel bei einer Temperatur destilliert werden, die unterhalb der Temperaturen liegt, bei der das Bindemittel geschädigt wird, tritt bei dem vorliegenden Verfahren keine Schädigung der Bindemittel ein, so daß diese problemlos wieder in die Produktion zurückgeführt werden können.

Da die Schichtsilikate und die Pigmente praktisch vollständig sedimentieren, entsteht nach deren Abtrennung eine klare Bindemittelphase, die nach der Abdestillation der Lösemittel ein Bindemittel ergibt, das nicht gefärbt ist, so daß es zur Herstellung von Lacken beliebiger Färbungen unter Zusatz der entsprechenden Pigmente wieder eingesetzt werden kann. Damit wird durch dieses Verfahren eine hohe Wertschöpfung der anfallenden Bindemittelanteile erreicht.

### Beispiel

1,0 kg Altlack der Zusammensetzung:
30 % Bindemittel
20 % Pigment/Füllstoffe
50 % organische Lösemittel
wird durch Abverdünnen mit ca. 1,0 kg Butylacetat auf eine Viskosität von 0,01 Pa*s eingestellt. Danach wird entweder 1 Gew. % organophiler Bentonit in Pulverform oder 10 Gew. % einer Stammdispersion von 10 % organophiler Bentonit in organischem Lösemittel eingerührt. Nach einer Rührzeit von ca. 15 min. wird dieser Ansatz zur Sedimentation und damit zur Entpigmentierung abgestellt. Nach einer Sedimentationszeit von bis zu 24 Stunden wird die entpigmentierte Bindemittel-/Lösemittel-Phase abdekantiert.
In einer Destillationseinrichtung wird durch Abdestillieren von Lösemittel (Butylacetat) die Bindemittel-/Lösemittel-Phase auf einen Bindemittelgehalt von 50 Gew. % aufkonzentriert, wobei die Restlösemittel weitgehend dem Ausgangslösemittel entsprechen.
Das so erhaltene Bindemittel wird für die Herstellung von Industrielacken verwendet.

## Patentansprüche

1. Verfahren zur Rückgewinnung von entpigmentierten Bindemitteln aus Lackspülmitteln, Altlacken und Lackkoagulaten, wobei das gebrauchte Material durch Zugabe von Lösemitteln auf eine Viskosität zwischen 0,01 und 0,1 Pa*s eingestellt und durch Schwerkraftsedimentation die Lösemittelphase von den Feststoffen und ggf. Wasser getrennt wird und durch Abdestillieren des überschüssigen Lösemittels die Bindemittelphase zurückgewonnen wird, **dadurch gekennzeichnet, daß** die niedrigviskose Mischung ein organophiles Schichtsilikat in einer Menge zwischen 0,01 und 5 Gew.% enthält und diese Mischung während einer Adsorptionsphase gerührt wird, bis eine Flockenbildung des Pigments zusammen mit dem Schichtsilikat erfolgt ist, bevor sie der Schwerkraftsedimentation unterzogen wird.

2. Verfahren gemäß Anspruch 1, **dadurch gekennzeichnet, daß** das Schichtsilikat vorher organophil eingestellt wird.

3. Verfahren gemäß einem der Ansprüche 1 und 2, **dadurch gekennzeichnet, daß** die Adsorption der Pigmente an das Schichtsilikat in einem Zeitraum von 1 - 20 min. erfolgt.

4. Verfahren gemäß einem der Ansprüche 1 - 3, **dadurch gekennzeichnet, daß** das Schichtsilikat in Pulverform oder in einer Stammdispersion mit einem Gehalt von 1 bis 10 % des Schichtsilikates in organischen Lösemitteln eingesetzt wird.

5. Verfahren gemäß einem der Ansprüche 1 - 4, **dadurch gekennzeichnet, daß** die niedrigviskose Mischung 5- 10 Teile Lösemittel auf 1 Teil Bindemittel und 0,1 - 2,5 Teile Pigmente und Füllstoff enthält.
